Europäisches Patentamt

European Patent Office

Office européen des brevets

(11) Veröffentlichungsnummer: **0 447 011 A2**

# EUROPÄISCHE PATENTANMELDUNG

(21) Anmeldenummer: 91250059.2

(51) Int. Cl.5: **B27G 1/00**

(22) Anmeldetag: 07.03.91

(30) Priorität: 15.03.90 DE 4008578

(43) Veröffentlichungstag der Anmeldung:
18.09.91 Patentblatt 91/38

(84) Benannte Vertragsstaaten:
AT CH DE DK ES FR GB IT LI NL SE

(71) Anmelder: Interholz Technik GmbH
Weisserlenstrasse 11
W-7800 Freiburg-Hochdorf(DE)

(72) Erfinder: Herberth, Peter, Dipl.-Ing.
Kappler Strasse 50d
W-7800 Freiburg(DE)

(74) Vertreter: Maikowski, Michael, Dipl.-Ing. Dr. et al
Patentanwälte Maikowski & Ninnemann
Xantener Strasse 10
W-1000 Berlin 15(DE)

(54) Verfahren und Vorrichtung zum Ausflicken langgestreckter Fehlstellen im Holz.

(57) Die Erfindung betrifft ein Verfahren und eine Vorrichtung zum Ausflicken langgestreckter Fehlstellen im Holz. Zum Ausflicken wird mittels eines Fräsers 2 im Holz 1 eine Ausfräsung 6 erzeugt. Nach dem Ausfräsen erfolgt eine Relativbewegung zwischen dem Fräser 2 und dem Holz 1. Flickschiffchen 3 werden bei 10 in orientierter Stellung zugeführt und von einem Transporteur 16 erfaßt. Die Ausfräsung wird durch die Leimdüse 17 beleimt und das Flickschiffchen 3 wird vom Transporteur 16 in einer Eindrückstellung über der Ausfräsung 6 gebracht, eingedrückt und ggf. bündig bearbeitet.

Fig. 8

Die Erfindung betrifft ein Verfahren nach dem Oberbegriff des Patentanspruchs 1 und eine Vorrichtung zur Durchführung des Verfahrens.

Es ist erforderlich, langgestreckte Fehlstellen im Holz, die beispielsweise durch Harzgallen oder Risse hervorgerufen werden, auszuflicken. Diese Fehlstellen werden in einer Arbeitsstation mittels eines Fräsers ausgefräst und die Ausfräsung danach beleimt. In diese beleimten Ausfräsungen werden von Hand Flickschiffchen eingesetzt. Gegenwärtig werden zu diesem Zweck Flickschiffchen verwendet, wie sie in der DE 21 25 799 C3 beschrieben werden. Diese Art des Ausflickens von Hand ist sehr zeitraubend und dadurch kostenintensiv. Da die Anforderungen der holzverarbeitenden Industrie an die Holzqualität ein häufiges Ausflicken bedingen, besteht ein erheblicher Bedarf an einer Verbesserung dieses zeitaufwendigen und arbeitsintensiven Flickverfahrens.

Der Erfindung liegt die Aufgabe zugrunde, ein Verfahren und eine Vorrichtung zur Durchführung dieses Verfahrens zur Verfügung zu stellen, mit denen das Ausflicken langgestreckter Fehlstellen im Holz ohne Handarbeit zeitsparend und automatisch durchgeführt werden kann.

Erfindungsgemäß wird diese Aufgabe durch die technischen Lehren des Patentanspruchs 1 und der Vorrichtungsansprüche gelöst.

In vorteilhafter Weise werden Flickschiffchen die auch als Doppelschiffchen ausgebildet sein können in einer orientierten Stellung zugeführt. Zu diesem Zweck können beispielsweise diese Flickschiffchen in einem Gurt orientiert angeordnet und mittels dieses Gurtes der Arbeitsstelle zugeführt werden. An der Arbeitsstelle werden dann die in orientierter Stellung zugeführten Flickschiffchen von einem Transporteur erfaßt. Nach dem Ausfräsen der Fehlstellen wird eine Relativbewegung zwischen dem Formfräser und dem Holz durchgeführt, so daß die Ausfräsung frei zugänglich ist. Die Ausfräsung wird beleimt. Danach wird das Flickschiffchen vom Transporteur in eine Eindrückstellung über der Ausfräsung gebracht und eingedrückt.

Da es möglich ist, daß das Flickschiffchen nach dem Eindrücken nicht bündig mit der Oberfläche des Holzes abschließt, wird mit Vorteil der überstehende Teil des Flickschiffchens bündig bearbeitet. Dies kann durch Hobeln, Fräsen oder Schleifen erfolgen.

Bei diesem Verfahren ist es besonders vorteilhaft, daß der Transporteur das Flickschiffchen an der Basis erfaßt. Der Transporteur bringt dann das Flickschiffchen über der beleimten Ausfräsung in die Eindrückstellung.

Mit besonderem Vorteil wird in einer Arbeitsstation nach dem Ausfräsen der Fehlstellen der Formfräser von der Ausfräsung fortbewegt. Eine Flickschiffchenzuführung, der Transporteur und eine Beleimvorrichtung werden zur Ausfräsung hinbewegt.

Damit das vom Transporteur erfaßte Flickschiffchen in einfacher Weise in die richtige Lage oberhalb der Ausfräsung gebracht werden kann, wird der Transporteur zwischen einer Flickschiffchenzuführung und der Ausfräsung auf einer Kreisbahn geführt. Der Transporteur kann mit Vorteil das Flickschiffchen oberhalb der Ausfräsung erfassen und dieses auf einer Kreisbahn nach unten über die beleimte Ausfräsung führen. Beim Erfassen des Flickschiffchens an dessen Basis ist dieses Flickschiffchen entgegengesetzt zur Eindrückrichtung ausgerichtet. Wenn nun der Transporteur eine Kreisbahn von etwa 180° durchläuft, nimmt das Flickschiffchen die Eindrückstellung oberhalb der beleimten Ausfräsung an.

Ein besonders vorteilhafter Verfahrensschritt besteht darin, daß der Transporteur und eine Beleimvorrichtung zwischen einer Flickschiffchenzuführung und der Ausfräsung auf der gleichen Kreisbahn hintereinander geführt werden. Dabei läuft die Beleimeinrichtung der Transportvorrichtung voraus, so daß in einem Arbeitsgang gleichzeitig beleimt und unmittelbar im Anschluß daran das Flickschiffchen über die beleimte Ausfräsung gebracht wird.

Zum Eindrücken des Flickschiffchens in die Ausfräsung wird der Transporteur abgesenkt.

Zur Zuführung der Flickschiffchen in einer vorbestimmten, orientierten Stellung wird erfindungsgemäß eine Zwangsorientierung für dreiseitige Prismen geschaffen. Dreiseitige Prismen mit einer Basis, deren Breite kleiner ist als die Scheitelhöhe der gleichschenkligen Flanken, nehmen im geschütteten Zustand statistisch verteilte Orientierungsrichtungen um ihre Längsachse ein. Um diese dreiseitigen Prismen in eine orientierte Stellung zu bringen, werden diese zweckmäßigerweise auf ihre Basis gestellt. Überraschend wurde gefunden, daß dieses Aufstellungsproblem wie folgt gelöst werden kann:
Die dreiseitigen Prismen werden in eine Führungsbahn eingegeben, deren Querschnitt zumindest teilkreiszylindrisch ist. Bei dieser Führungsbahn kann es sich um eine teilweise offenzylindrische Führungsrinne und/oder um ein geschlossenes zylindrisches Rohr handeln. In diese Führungsbahnen werden die dreiseitigen Prismen derart eingegeben, daß deren Längsachse in Richtung der Führungsbahnachse weist.

Mit Vorteil wird der Radius dieser zylindrischen oder teilzylindrischen Führungsbahn gemäß einer vorbestimmten Beziehung zu den Abmessungen des Prismas festgelegt. Das vorstehend beschriebene dreiseitige Prisma hat den Querschnitt eines gleichschenkligen Dreiecks. Wenn die Scheitelhöhe dieses Prisma, d.h. der Abstand des Scheitels über der Basis H ist und die Breite des Prismas B, so zeigt eine

EP 0 447 011 A2

einfache Überlegung, daß der Radius des Umkreises dieses Prismas gleich

$$R_F = \frac{H}{2} + \frac{B^2}{8H}$$

ist. Wenn man den Radius dieser zylindrischen Führung zumindest gleich oder größer als den des Umkreises dieses Prismas macht, dann wird ein in diese Führung eingegebenes Prisma auf zwei Prismenkanten geführt und bei einer Führung auf dieser Führungsbahn unter Einwirkung der Schwerkraft eine Lage einnehmen, in der der Schwerpunkt möglichst tief liegt. Bei der Führung des Prismas in einer derartigen Führung wird dieses mit seiner Hochachse entweder nach rechts oder nach links mehr oder weniger geneigt laufen. Wenn das aus dieser zylindrischen Führung austretende mehr oder weniger nach rechts oder links geneigte Prisma anschließend in eine V-förmige Rinne eintritt, wird es in dieser zwangsweise so geführt, daß es eine von zwei möglichen Schräglagen einnimmt, d.h. es wird entweder nach rechts oder nach links unter einem durch die Rinnenform bestimmten Winkel geneigt sein. Wenn dieses Prisma beim Austreten aus dieser Führungsrinne in eine Führungsbahn eingeführt wird, die zwei zueinander konvergierende Schienen aufweist, so wird durch diese Schienen das Prisma gleichgültig ob es nach rechts oder nach links geneigt ist, zwangsläufig auf seine Basis gekippt und nimmt dadurch in eindeutiger Weise automatisch eine orientierte Stellung an.

Da insbesondere die Flickschiffchen, die in der DE 21 25 799 C3 beschrieben werden, im wesentlichen langgestreckte dreiseitige Prismen sind, die einen Querschnitt in Form eines gleichschenkligen Dreiecks und kreisförmig gebogene Prismenkanten haben, kann mit Vorteil das vorstehend beschriebene Verfahren verwendet werden. Ein Flickschiffchen wird dabei mit zwei seiner Kanten auf einer im Querschnitt zumindest teilkreiszylindrischen Führung abgestützt, einer V-förmigen Führungsrinne zugeführt, in dieser mit seiner Basis und der einen oder anderen Flanke gegen die Rinnenwandungen angelegt, in einer von zwei möglichen Stellungen ausgerichtet, in dieser Schräglage zwischen zwei konvergierende Führungsschienen eingeführt und von diesen in eine, auf der Basis stehende Lage gekippt und so vom Tansporteur erfaßt. Wegen der bogenförmigen Kanten der Flickschiffchen wird die Reibung bei der Führung in der Führungsbahn mit zumindest teilzylindrischem Querschnitt stark herabgesetzt, so daß sie bereits in dieser Phase eine vorteilhafte Ausrichtung für die Übergabe in die V-förmige Rinne einnehmen. Die V-förmige Rinne wird derart an die kreiszylindrische Führung angeschlossen, daß deren Wandungen tangential zum Querschnitt dieser Führung verläuft.

Besonders vorteilhaft ist es, prismatische Flickschiffchen aus einem Magazin vereinzelt im Arbeitstakt in die im Querschnitt zumindest teilkreiszylindrische Führung einzugeben.

Damit das prismatische Flickschiffchen sicher von den konvergierenden Schienen in die orientierte Lage gekippt werden kann, werden die prismatischen Schiffchen von diesen Schienen in einem im Bereich

$$B \cos \frac{\alpha}{2} < H_F < (\frac{B}{2} + H) \cos \alpha$$

liegenden Abstand $H_F$ vom Scheitel der V-förmigen Führungsrinne geführt, wobei $\alpha$ der Scheitelwinkel der Rinne, B die Breite des Flickschiffchens an der Basis und H dessen Höhe sind.

Dieses Verfahren wird mit Vorteil automatisch durchgeführt. Handarbeit ist nicht mehr erforderlich.

Die Vorrichtung zur Durchführung des Verfahrens weist mit Vorteil eine mit ihrem Aufgabenende unter einem Magazin angeordnete Orientierungsrutsche auf. Diese umfaßt eine im Querschnitt zumindest teilkreiszylindrische Führung, an die sich eine V-förmige Führungsrinne anschließt, die in eine Führungsbahn mit zwei konvergierenden Führungsschienen mündet. An die Führungsschienen schließt sich die Führungsbahn eines Transporteurs für die prismatischen Flickschiffchen an. Das Aufgabenende der Orientierungsrutsche ist mit Vorteil eine offene teilzylindrische Rinne. Diese Ausbildung ermöglicht, daß aus einem Magazin im Arbeitstakt einzelne Flickschiffchen in diese offene teilzylindrische Rinne geworfen werden können.

Die beiden konvergierenden Führungsschienen sind in einer Höhe $H_F$ über dem Scheitel der V- förmigen Führungsrinne angeordnet, die im folgenden Bereich liegt:

3

$$B \cos \frac{\alpha}{2} < H_F < (\frac{B}{2} + H) \cos \frac{\alpha}{2}$$

mit

$\alpha$ = Scheitelwinkel der V-förmigen Führungsrinne,
B = Breite der Basis des Flickschiffchens und
H = dessen Höhe.

Mit besonderem Vorteil schließen sich an diese konvergierenden Führungsschienen zwei Parallele Führungsschienen an. Durch diese parallelen Führungsschienen wird das orientierte Flickschiffchen stabilisiert.

Bei einer vorteilhaften Ausführungsform der Vorrichtung ist der Transporteur um eine Achse auf einer Kreisbahn verschwenkbar. Die Kreisbahn verläuft vom Ende der Orientierungsrutsche nach unten zu einer Stelle, die oberhalb der Ausfräsung im Holz liegt. Der Transporteur ist an der Achse fest montiert und diese ist über der Ausfräsung heb- und senkbar, so daß der Transporteur das Flickschiffchen eindrücken kann.

Der Transporteur weist zwei konvergierende Klemmbalken für die Aufnahme der Flickschiffchen auf, die am Transporteur auseinander schwenkbar gelagert sind. Zwischen diese konvergierenden Klemmbacken läuft jeweils ein Schiffchen aus der Orientierungsrutsche. Dabei legen sich die Klemmbacken derart gegen die Flanken des Schiffchens an, daß dieses beim Verschwenken sicher gegen einen Druckfuß gehalten wird. Sobald der Transporteur in seine Stellung oberhalb der beleimten Ausfräsung gelangt, werden die Klemmbacken auseinandergeschwenkt und das Schiffchen mit dem Druckfuß eingedrückt.

Am Transporteur ist ein mit den Klemmbacken zusammenarbeitender Druckfuß zum Eindrücken der Flickschiffchen montiert. Ferner sind am Transporteur Stößel verschiebbar gelagert, die in Antriebsverbindung mit den Klemmbacken stehen. Diese Stößel sind durch Wellen miteinander verbunden, die in Langlöcher der auseinanderschwenkbaren Klemmbacken gleiten.

Wenn der Transporteur zum Eindrücken eines Flickschiffchens in die Ausfräsung abgesenkt wird, legen sich die beiden Stößel gegen die Holzoberfläche an und beim Absenken des Transporteurs erfolgt eine relative Gleitbewegung zwischen diesen Stößeln und den anderen Bauteilen des Transporteurs. Durch die beschriebene Antriebsverbindung des Stößels mit den Klemmbacken werden beim Absenken des Transporteurs die Klemmbacken auseinandergeschwenkt und das Schiffchen wird vom Druckfuß des Transporteurs in die beleimte Ausfräsung eingedrückt.

Am Transporteur ist mit Vorteil eine Leimdüse montiert, die beim Verschwenken des Transporteurs den Klemmbacken vorausläuft und Leim in die Ausfräsung abgibt, ehe der Transporteur das von den Klemmbacken gehaltene Flickschiffchen in die Eindrückstellung bringt.

Mit besonderem Vorteil sind in einer Arbeitsstation die Orientierungsrutsche und der Transporteur mit Druckfuß und Leimdüse gemeinsam verschiebbar angeordnet. Dadurch wird ein Aggregat gebildet, das nach dem Ausfräsen der Fehlstelle und der Relativverschiebung zwischen dem Holz und dem Fräser in eine Arbeitsstellung gegenüber der Ausfräsung gebracht werden kann.

Mit besonderem Vorteil wird in dieser Vorrichtung bei der Durchführung des erfindungsgemäßen Verfahrens das Holz in einer festgespannten Lage gehalten.

In dieser Arbeitsstation kann eine Hobeleinrichtung vorgesehen sein um, falls erforderlich, überstehende Abschnitte des eingedrückten Flickschiffchen abzuhobeln.

Bei einer bevorzugten Ausführungsform weist das Magazin eine umlaufende, schiffchentransportschalentragende Förderkette auf. Diese Förderkette ist in einem Magazingehäuse angeordnet, das am unteren Ende eine Austrittsöffnung für Schiffchen aufweist. Die Förderkette kann im Magazin im Arbeitstakt bewegt und aus der Austrittsöffnung kann dann jeweils ein Schiffchen in die Orientierungsrutsche abgegeben werden.

Ein Ausführungsbeispiel der Erfindung soll unter Bezugnahme auf die Fig. der Zeichnung in der folgenden Beschreibung erläutert werden.

Es zeigen:

Fig. 1 u. 2      schematisch das Ausfräsen einer langgestreckten Fehlstelle im Holz
Fig. 3 - 5      eine Seitenansicht, eine Schnittansicht und eine Draufsicht eines Flickschiffchens,
Fig. 6 u. 7      Schnittansichten eines in das Holz eingesetzten Flickschiffchens
Fig. 8      eine schematische Darstellung einer Vorrichtung zur Durchführung des Verfahrens
Fig. 9 - 11      schematische Ansichten zur Erläuterung der erfindungsgemäßen Orientierungsrutsche,
Fig. 12      eine Vorderansicht eines Transporteurs in zwei verschiedenen Betriebsstellungen,

Fig. 13          eine Seitenansicht des Transporteurs und

Fig. 14 u. 15    Schnittansichten eines Magazins.

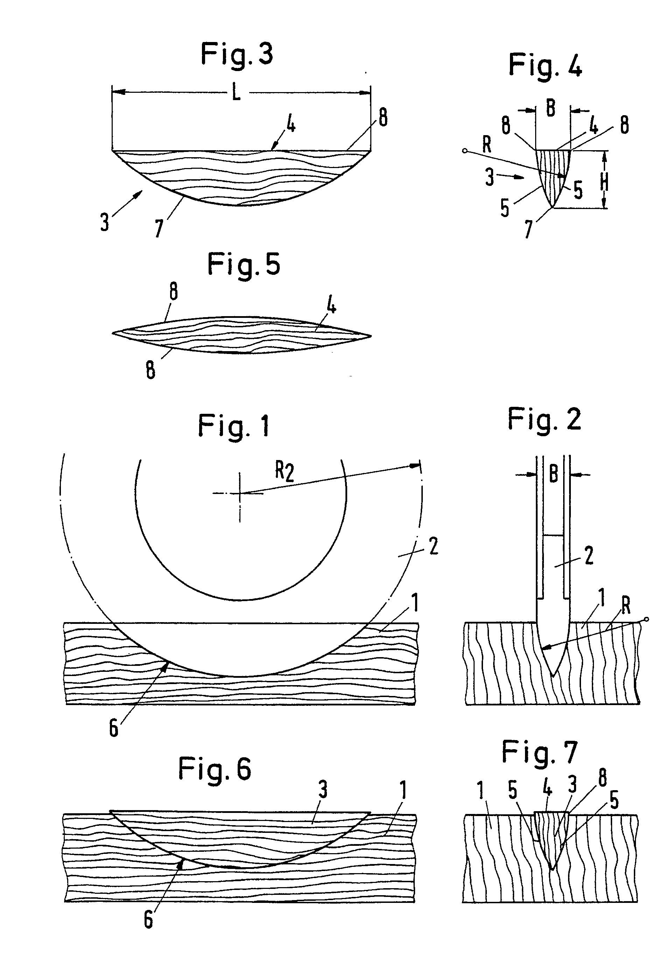

In den Fig. 1 und 2 ist Holz 1 dargestellt. Ein schematisch gezeigter Formfräser 2 fräst eine Fehlstelle im Holz 1, beispielsweise einen Riß oder eine Harzgalle aus. Die Ausfräsung ist bei 6 dargestellt. Dieser Fräser 2 weist einen Radius R2 und eine Breite B auf. Der Formfräser ist, wie in Fig. 2 dargestellt, bombiert und wird aus zwei symmetrischen Kugelzonenabschitten gebildet, deren Radius R ist. Zum Ausbessern wird die Ausfräsung 6 beleimt und in diese wird, wie in den Fig. 6 und 7 gezeigt, ein Flickschiffchen 3 eingedrückt. Das in den Fig. 3 bis 5 dargestellte Flickschiffchen 3 ist im Prinzip ein dreiseitiges Prisma. Wie Fig. 5 zeigt, weist dieses Prisma eine Basis 4 auf und diese Basis 4 wird durch zwei symmetrische Kreisabschnitte begrenzt. Diese Kreisabschnitte bilden die Basiskanten 8. Die breiteste Stelle der Basiskanten 8 ist in Fig. 4 mit B bezeichnet. Diese Breite entspricht, wie Fig. 2 zeigt, der Breite B des Formfräsers 2. Das Flickschiffchen 3 weist gewölbte Flanken 5 auf, deren Krümmungsradius R dem in Fig. 2 dargestellten Krümmungsradius R der Flanken des Formfräsers 2 entspricht. Diese gewölbten Flanken 5 schneiden sich in einer Scheitelkante 7, die ein Kreisbogen ist, dessen Radius R2 dem Radius R2 des Formfräsers 2 entspricht, wie die Fig. 1 und 3 zeigen.

Diese Flickschiffchen, die in der DE 21 25 799 C3 beschrieben werden, sind in unterschiedlichen Größen auf dem Markt, wobei die Schiffchengrößen durch die in den Fig. 3 und 4 angegebenen Maße, Länge L und Breite B, gekennzeichnet sind.

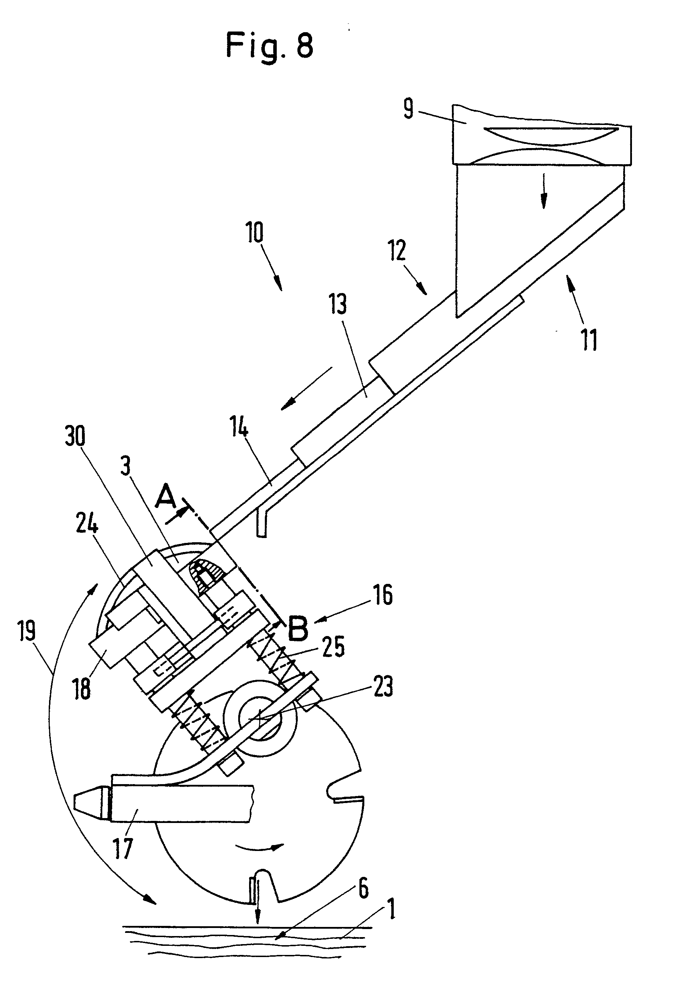

Beim erfindungsgemäßen Verfahren wird, wie die Fig. 1 und 2 zeigen, mittels des Formfräsers 2 im Holz 1 die Fehlstelle ausgefräst, so daß die in den Fig. 1 und 2 dargestellten Ausfräsung 6 entsteht. Beim dargestellten Ausführungsbeispiel ist das Holz 1 in einer Maschine festgespannt. Nach dem Ausfräsen wird der Formfräser 2 aus dem Holz 1 herausgehoben und von der Ausfräsung 6 entfernt. Danach wird das schematisch in Fig. 8 dargestellte Aggregat in die Arbeitsstellung gebracht. Dieses Aggregat weist ein Magazin 9 auf, in dem die in den Fig. 3 bis 5 dargestellten Flickschiffchen 3 angeordnet sind. Aus diesem Magazin 9 werden die Flick schiffchen 3 vereinzelt in die in Fig. 8 schematisch dargestellte Orientierungsrutsche 10 eingegeben, an deren Ende die Flickschiffchen 3 eine vorbestimmte orientierte Stellung haben.

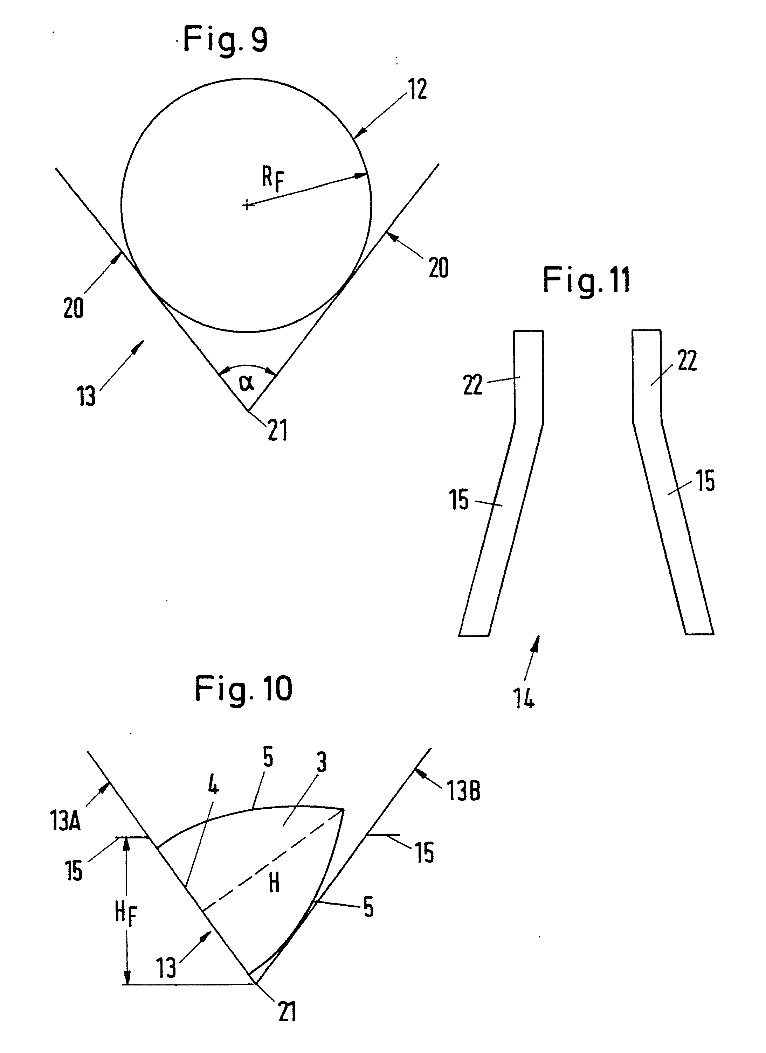

Die Orientierungsrutsche 10 ist mit ihrem Aufgabeende 11 unter dem Magazin 9 angeordnet. Aus diesem Magazin 9 werden vereinzelt die Flickschiffchen 3 in das Aufgabeende 11 derart abgegeben, daß die Längsachse des Flickschiffchens 3 (in Fig. 3 Richtung L) in Förderrichtung der Orientierungsrutsche 10 liegt. An das Aufgabeende 11 schließt sich eine im Querschnitt zumindes teilzylindrische Führung 12 an. In Fig. 9 ist schematisch ein vollzylindrisches Rohr im Schnitt dargestellt, welches den Radius $R_F$ aufweist, der, wie vorstehend dargelegt, bemessen ist.

Das Aufgabeende 11 ist als offene teilzylindrische Rinne ausgebildet. Das in das Aufgabeende 11 eingeführte Flickschiffchen 3 gleitet in der zylindrischen Führung 12 auf der Scheitelkante 7 und einer der Basiskanten 8. Bei Betrachtung der Fig. 9 ist innerhalb der zylindrischen Führung die in Fig. 4 dargestellte Höhe H des Flickschiffchens nach rechts oder nach links geneigt, wobei die Größe des Neigungswinkels statistisch verteilt ist, d.h. innerhalb der zylindrischen Führung 12 ist zwar das Flickschiffchen 3 entweder nach recht oder nach links geneigt, jedoch sind die Neigungswinkel gegenüber der Längsachse dieser Führung 12 willkürlich und unbestimmt.

An diese zylindrische Führung 12 schließt sich die V-förmige Führungsrinne 13 an. Diese V-förmige Führungsrinne 13 weist zwei ebene Führungswände 20 auf, die unter einem Scheitelwinkel α zueinander geneigt sind. Wie Fig. 9 zeigt, liegt der Scheitel der V-förmigen Führungsrinne 13 derart unterhalb der zylindrischen Führung 12, daß die Führungswände 20 Tangentialebenen an den durch die Führung 12 gebildeten Zylinder sind. Wenn das mehr oder weniger nach rechts oder links geneigte Flickschiffchen 3 aus der Führungsbahn 12 heraus in die V-förmige Führungsrinne 13 eintritt, wird dessen Basis 4 an die eine oder andere Wand 20 der V-förmigen Führung 13 angelegt und eine der Flanken 5 legt sich gegen die andere Wande 20 an. Dies bedeutet, daß in der V-förmigen Führungsrinne 13 das Flickschiffchen 3 in einer von zwei möglichen Schräglagen geneigt geführt wird.

Um nun das Flickschiffchen 3 in eine orientierte, im vorliegenden Fall aufrecht stehende Lage zu bringen, wird das nach rechts oder links geneigte Flickschiffchen 3 aus der V-förmigen Führungsrinne 13 in eine Führungsbahn 14 abgegeben, die, wie schematisch Fig. 11 zeigt, zwei zueinander konvergierende Führungsschienen 15 aufweist. Diese Führungsschienen 15 sind, wie Fig. 10 zeigt, in einer vorbestimmten Höhe $H_F$ oberhalb des Scheitels 21 der V-förmigen Führungsrinne 13 angeordnet. Die Höhenbemessung $H_F$ ist in der vorstehenden Beschreibung angegeben. Diese Höhenbemessung stellt sicher, daß bei der Darstellung in Fig. 10 die rechte konvergierende Schiene 15 das in die Führungsbahn 14 eintretende Flickschiffchen 3 nach links in die aufrechte Stellung kippt. Beim dargestellten Ausführungsbeispiel wird durch die parallelen Führungsschienen 22 das Flickschiffchen 3 stabilisiert.

An das Austrittsende der Orientierungsrutsche 10 schließt sich, wie Fig. 8 schematisch veranschaulicht,

5

die Bewegungsbahn 19 eines Transporteurs 16 an. Beim dargestellten Ausführungsbeispiel ist der Transporteur 16 an einer Achse 23 montiert. Wird diese gedreht, wird diese auf der in Fig. 8 dargestellten Kreisbahn mitgenommen. Diese Achse 23 und die Kreisbahn 19 sind derart gestaltet, daß der Transporteur 16 das aus der Orientierungsrutsche 10 austretende Flickschiffchen 3 über Kopf an der Basis 4 erfaßt und dieses längs der Kreisbahn 19 nach unten über die Ausfräsung verschwenkt. Die Achse 23 ist über der Ausfräsung 6 heb- und senkbar.

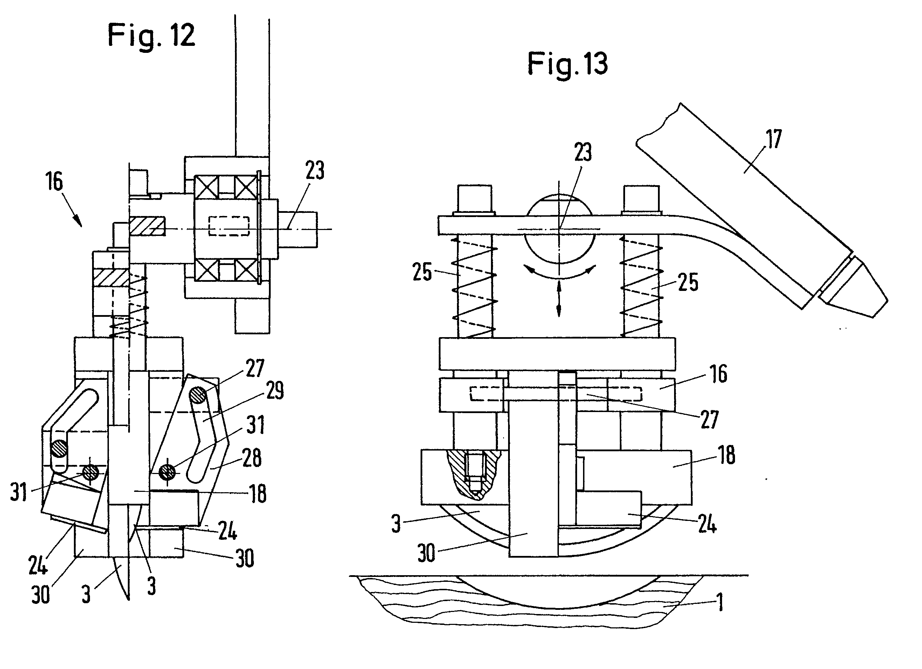

Wie die Fig. 12 und 13 zeigen, weist der Transporteur 16 zwei Klemmbacken 24 auf, die in der Draufsicht, ähnlich wie die Schienen 15 in Fig. 11 derart konvergieren, daß bei der in Fig. 8 dargestellten Stellung des Transporteurs das Schiffchen 3 in diese konvergierenden Klemmbacken 24 läuft und an den Flanken derart von den Klemmbacken erfaßt wird, wie es in Fig. 12 rechts schematisch gezeigt ist. Die konvergierenden Klemmbacken sind derart ausgebildet, daß sie unter die gewölbten Flanken 5 (Fig. 4) der Flickschiffchen 3 greifen und zwar etwa tangential zur linken Mitte bei der Grundrißdarstellung des Schiffchens in Fig. 5. Dadurch ist es möglich, diese Flickschiffchen 3 unter Einwirkung der Schwerkraft in eine definierte Endstellung im Tansporteur 16 abzugeben. Die Schiffchen laufen soweit in die konvergierenden Klemmbacken 24 hinein, bis die Flanken 5 gegen diesen anliegen. Dabei wird das Schiffchen 3 an den Flanken 5 untergriffen und stützt sich auf einem am Transporteur 16 ausgebildeten Druckfuß 18 ab. Bei einer Schwenkbewegung des Transporteurs 16 längs der Bahn 19 wird das Flickschiffchen sicher in seiner Stellung zwischen Druckfuß 18 und Klemmbacken 24 so lange gehalten bis der Transporteur l6 seine Endlage über der Ausfräsung 6 erreicht hat.

Damit beim Eindrücken die Klemmbacken 24 geöffnet werden können, sind diese am Transporteur 16 an Achsen 25 schwenkbar gelagert.

Am Transporteur 16 ist, wie die Fig. 8 und 13 zeigen, eine Leimdüse 17 derart montiert, daß sie beim Verschwenken des Transporteurs 16 den Klemmbacken 24 mit dem eingeklemmten Flickschiffchen 3 vorausläuft.

Zum Eindrücken eines vom Transporteur 16 über die Ausfräsung 6 gebrachten Flickschiffchens 3 wird die Achse 23 nach unten bewegt. Dadurch wird der nach unten verschwenkte Transporteur abgesenkt. Am Transporteur 16sind zwei Stößel 30 mittels Führungsstangen 25 gleitbar gelagert. Die Klemmbacken 24 sind mittels Blechen 28 am Transporteur 16 um Achsen 31 verschwenktbar gelagert. Die Bleche 28 weisen Langlöcher 29 auf. Wie Fig. 12 schematisch zeigt, sind die Stößel 30 mittels Wellen 27 verbunden, die sich durch die Langlöcher 29 in den Blechen 28 hindurch erstrecken. Bei der Abwärtsbewegung des Transporteurs 16 zum Eindrücken der Flickschiffchen in die Ausfräsungen legen sich die Stößel 30 gegen die Oberfläche des Holzes 1 an. Wenn der Transporteur 16 weiter nach unten bewegt wird, drücken, wie Fig. 12 zeigt, die Wellen 27 durch ihre Führung in den Langlöchern 29 die Klemmbacken 24 auseinander, so daß, wie in Fig. 12 auf der linken Seite schematisch angedeutet, das Flickschiffchen 3 durch den Druckfuß 18 in die Ausfräsung eingedrückt werden kann.

Wenn die Flickschiffchen 3, wie schematisch in den Fig. 6 und 7 veranschaulicht, nicht bündig mit der Oberseite des Holzes 1 abschließen, kann mittels einer nicht dargestellten Hobelvorrichtung ein Abhobeln durchgeführt werden.

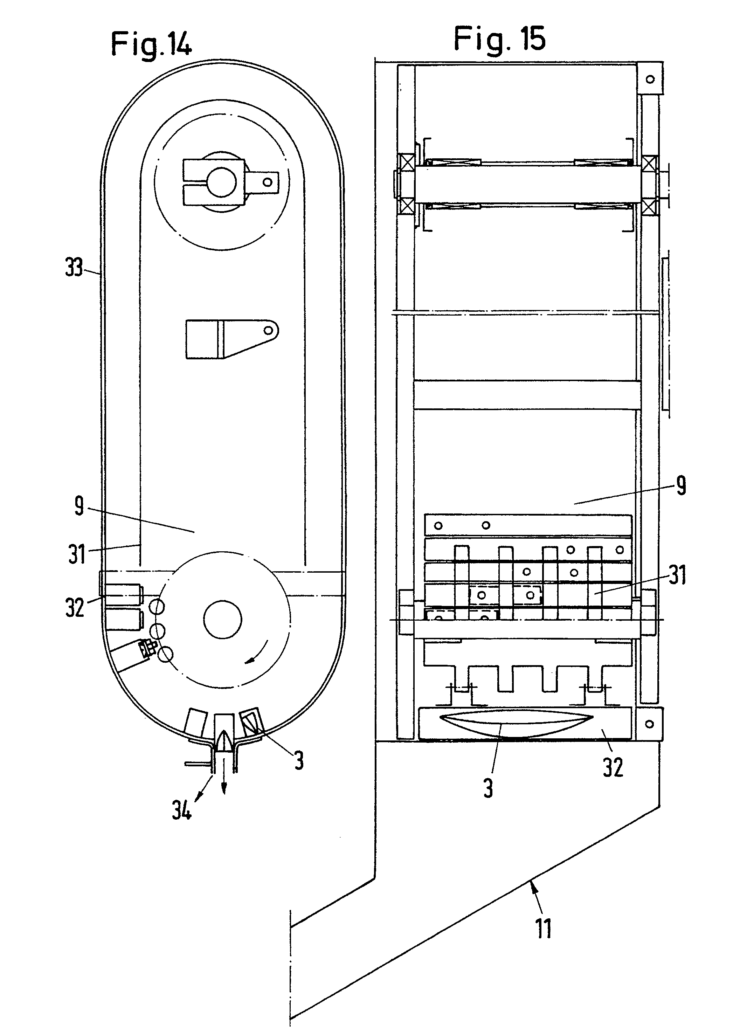

In den Fig. 14 und 15 sind Schnittansichten eines Ausführungsbeispiels des Magazins 9 dargestellt. Dieses Magazin ist, wie Fig. 8 zeigt, oberhalb der Aufnahmestelle 11 der Orientierungsrutsche 10 angeordnet.

Dieses Magazin weist im Inneren eine umlaufende Kette 31 auf. Diese Kette trägt eine Anzahl Aufnahmeschalen 32 für Flickschiffchen 3. In den Fig. 14 und 15 sind jeweils am unteren Ende Flickschiffchen 3 veranschaulicht. Diese Flickschiffchen liegen einzeln in den Schalen 32 in beliebiger Richtung um ihre Längsachse orientiert.

Die Förderkette 31 wird im Magazin 9 im Arbeitstakt schrittweise derart vorgeschaltet, daß jeweils eine Schale 32 über die in Fig. 14 dargestellte Öffnung 34 im Magazin zu liegen kommt, so daß aus dem Magazin durch die Öffnung 34 jeweils ein Schiffchen 3 in die Aufnahmerinne 11 der Orientierungsrutsche 10 fallen kann.

**Patentansprüche**

1. Verfahren zum Ausflicken langgestreckter Fehlstellen im Holz, insbesondere Harzgallen oder Risse durch Ausfräsen der Fehlstellen und Eindrücken prismatischer Flickschiffchen in die beleimten Ausfräsungen.

dadurch gekennzeichnet, daß

ein Flickschiffchen (3) oder Doppelschiffchen in orientierter Stellung zugeführt und von einem Transporteur (16) erfaßt, nach dem Ausfräsen eine Relativbewegung zwischen Fräser (2) und Holz (1) durchgeführt, die Ausfräsung (6) beleimt, das Flickschiffchen (3) vom Transporteur (16) in eine Eindrückstellung über der Ausfräsung (6) gebracht, eingedrückt und gegebenenfalls bündig bearbeitet wird.

2. Verfahren nach Anspruch 1,

dadurch gekennzeichnet, daß

das Flickschiffchen (3) vom Transporteur (16) an der Basis (4) erfaßt wird.

3. Verfahren nach Anspruch 1 oder 2,

dadurch gekennzeichnet, daß

in einer Arbeitsstation (Fig. 8) nach dem Ausfräsen der Fehlstelle der Fräser (2) von der Ausfräsung (6) fort- und eine Flickschiffchen-Zuführung (10), der Transporteur (16), eine Beleim-(17) sowie eine Eindrückeinrichtung (18) zur Ausfräsung (6) hinbewegt werden.

4. Verfahren nach mindestens einem der Ansprüche 1 bis 3,

dadurch gekennzeichnet, daß

der Transporteur (16) zwischen einer Flickschiffchenzuführung (10) und der Ausfräsung (6) auf einer Kreisbahn (19) geführt wird.

5. Verfahren nach mindestens einem der Ansprüche 1 bis 4,

dadurch gekennzeichnet, daß

der Transporteur (16) und eine Beleimeinrichtung (17) zwischen einer Flickschiffchenzuführung (10) und der Ausfräsung (6) auf der gleichen Kreisbahn (19) hintereinander geführt werden.

6. Verfahren nach mindestens einem der Ansprüche 1 bis 5,

dadurch gekennzeichnet, daß

zum Eindrücken des Schiffchens (3) in die Ausfräsung (6) der Transporteur (16) abgesenkt wird.

7. Verfahren nach mindestens einem der Ansprüche 1 bis 6,

dadurch gekennzeichnet, daß

ein Flickschiffchen (3), mit zwei seiner Kanten (7, 8) auf einer, im Querschnitt zumindest teilkreiszylindrischen Führung (12) abgestützt, einer V-förmigen Führungsrinne (13) zugeführt, in dieser mit seiner Basis (4) und der einen oder anderen Flanke (5) gegen die Rinnenwandungen (20) angelegt und in einer von zwei möglichen Schräglagen ausgerichtet und in dieser Schräglage zwischen zwei konvergierende Führungsschienen (15) eingeführt und von diesen in eine, auf der Basis (4) stehende Lage gekippt und dann vom Transporteur (16) erfaßt wird.

8. Verfahren nach Anspruch 7,

dadurch gekennzeichnet, daß

prismatische Flickschiffchen (3) aus einem Magazin (9) vereinzelt im Arbeitstakt in eine im Querschnitt zumindest teilkreiszylindrische Führung (12) eingegeben werden.

7

9. Verfahren nach Anspruch 7 oder 8,

dadurch gekennzeichnet, daß

der Radius ($R_F$) der im Querschnitt zumindest teilkreiszylindrischen Führung (12) nach der Formel

$$R_F \geq \frac{H}{2} + \frac{B^2}{8H}$$

mit
H = Höhe
B = Breite der Basis (4) des Flickschiffchens (3)
bemessen wird.

10. Verfahren nach mindestens einem der Ansprüche 7 bis 9,

dadurch gekennzeichnet, daß

das prismatische Flickschiffchen (3) von den konvergierenden Führungsschienen (15) in einem im Bereich

$$B \cos \frac{\alpha}{2} < H_F < (\frac{B}{2} + H) \cos \frac{\alpha}{2}$$

liegenden Abstand vom Scheitel der V-förmigen Führungsrinne (13) geführt wird, mit
$\alpha$ = Scheitelwinkel der V-förmigen Führungsrinne (13)
B = Breite der Basis (4) des Flickschiffchens (3) und
H = dessen Höhe.

11. Verfahren nach mindestens einem der Ansprüche 1 bis 10,

davon gekennzeichnet, daß

dieses in einer Arbeitsstation automatisch durchgeführt wird.

12. Vorrichtung zur Durchführung des Verfahrens nach mindestens einem der Ansprüche 1 bis 11,

dadurch gekennzeichnet, daß
1. eine mit ihrem Aufgabeende (11) unter einem Magazin (9) angeordnete Orientierungsrutsche (10)
1.1 die eine im Querschnitt zumindest teilkreiszylindrische Führung (12) aufweist, an die sich
1.2 eine V-förmige Führungsrinne (13) anschließt,
1.3 die in eine Führungsbahn (14) mit zwei konvergierenden Führungsschienen (15) mündet, an die sich
2. die Führungsbahn (14) eines Transporteurs (16) für die prismatischen Flickschiffchen (3) anschließt.

13. Vorrichtung nach Anspruch 12,

dadurch gekennzeichnet, daß
1.1.1 das Aufgabeende (11) der Orientierungsrutsche (10) eine offene teilzylindrische Rinne ist.

14. Vorrichtung nach Anspruch 12 oder 13,

EP 0 447 011 A2

dadurch gekennzeichnet, daß

1.2.1 die Seitenwände (20) der V-förmigen Führungsrinne (13) tangential zum kreuzförmigen Querschnitt der kreiszylindrischen Führung (12) verläuft (Fig. 9).

**15.** Vorrichtung nach mindestens einem der Ansprüche 12 bis 14,

dadurch gekennzeichnet, daß

1.2.2 die beiden konvergierenden Führungsrinnen (15) in einer Höhe ($H_F$) über dem Scheitel (21) der V-förmigen Führungsrinne (13) angeordnet sind, die der folgenden Bedingung genügt:

$$B \cos \frac{\alpha}{2} < H_F \left(\frac{B}{2} + H\right) \cos \alpha$$

mit

$\alpha$ = Scheitelwinkel der V-förmigen Führungsrinne (13)
B = Breite der Basis (4) des Flickschiffchens (3) und
H = dessen Höhe.

**16.** Vorrichtung nach mindestens einem der Ansprüche 12 bis 15,

dadurch gekennzeichnet, daß

1.3.1 sich in der Führungsbahn (14) an die konvergierenden Führungsschienen (15) zwei parallele Führungsschienen (22) anschließen.

**17.** Vorrichtung nach mindestens einem der Ansprüche 12 bis 16,

dadurch gekennzeichnet, daß

2.1 der Transporteur (16) um eine Achse (23) auf einer Kreisbahn (19) verschwenkbar ist.

**18.** Vorrichtung nach Anspruch 17,

dadurch gekennzeichnet, daß

2.1.1 der Transporteur (16) an der Achse (23) fest montiert und diese über der Ausfräsung (6) heb- und absenkbar ist.

**19.** Vorrichung nach mindestens einem der Ansprüche 12 bis 18,

dadurch gekennzeichnet, daß

2.2 am Transporteur (16) zwei konvergierende Klemmbacken (24) für die Aufnahme der Flickschiffchen (3) verschwenkbar gelagert sind.

**20.** Vorrichtung nach mindestens einem der Ansprüche 12 bis 19,

dadurch gekennzeichnet, daß

2.3 am Transporteur (16) ein Druckfuß (18) zum Eindrücken der Flickschiffchen montiert ist.

**21.** Vorrichtung nach mindestens einem der Ansprüche 12 bis 19,

dadurch gekennzeichnet, daß

2.3.1 am Transporteur zwei Stößel (30) verschiebbar gelagert sind, die in Antriebsverbindung mit den Klemmbacken (24) stehen.

**22.** Vorrichtung nach Anspruch 21,

dadurch gekennzeichnet, daß

2.3.2 die Stößel (30) durch Wellen (27) miteinander verbunden sind, die in Langlöchern (29) der Klemmbacken (24) gleiten.

23. Vorrichtung nach mindestens einem der Ansprüche 12 bis 22,

dadurch gekennzeichnet, daß
2.4 am Transporteur (16) eine Leimdüse (17) montiert ist.

24. Vorrichtung nach mindestens einem der Ansprüche 12 bis 23,

dadurch gekennzeichnet, daß
3. in einer Arbeitsstation die Orientierungsrutsche (10) und der Transporteur (16) mit Druckfuß (18) und Leimdüse (17) gemeinsam verschiebbar angeordnet sind.

25. Vorrichtung nach mindestens einem der Ansprüche 12 bis 24,

dadurch gekennzeichnet, daß
4. in der Arbeitsstation eine Hobeleinrichtung vorgesehen ist.

26. Vorrichtung nach mindestens einem der Ansprüche 12 bis 25,

dadurch gekennzeichnet, daß
5. dar Magazin (9) eine umlaufende, Schiffchentransportschale (32) tragende Förderkette (31) und das Magazingehäuse (33) eine Austrittsöffnung (34) für Schiffchen aufweisen.

Fig. 3

Fig. 4

Fig. 5

Fig. 1

Fig. 2

Fig. 6

Fig. 7

# Fig. 8

## Fig. 9

$R_F$

12

20

20

13

α

21

## Fig. 11

22

22

15

15

14

## Fig. 10

5

3

4

13A

15

H

13B

$H_F$

15

5

13

21

Fig.13

Fig. 12

14

## Fig.14

## Fig. 15